Europäisches Patentamt

European Patent Office

Office européen des brevets

(11) Publication number: **0 054 440**
**B1**

# EUROPEAN PATENT SPECIFICATION

(45) Date of publication of patent specification: **28.08.85**

(51) Int. Cl.⁴: **C 08 F 297/04**

(21) Application number: **81305931.8**

(22) Date of filing: **17.12.81**

(54) Styrene-butadiene block copolymer.

(30) Priority: **17.12.80 JP 178226/80**
**26.12.80 JP 186194/80**
**26.12.80 JP 186195/80**
**03.06.81 JP 85481/81**

(43) Date of publication of application:
**23.06.82 Bulletin 82/25**

(45) Publication of the grant of the patent:
**28.08.85 Bulletin 85/35**

(84) Designated Contracting States:
**FR NL**

(56) References cited:
**AU-B- 429 728**
**US-A-3 778 490**

**CHEMICAL ABSTRACTS, vol. 87, no. 22,**
**November 28, 1977, abstract 169030s, page 46**
**COLUMBUS, OHIO (US)**

(73) Proprietor: **JAPAN SYNTHETIC RUBBER CO.,
LTD.**
**11-24, Tsukiji-2-chome Chuo-ku**
**Tokyo (JP)**

(72) Inventor: **Takeuchi, Yasumasa**
**22-32, Shiratoridai Midori-ku**
**Yokohama (JP)**
Inventor: **Sakakibara, Mitsuhiko**
**260-595, Heizushinmachi**
**Yokkaichi-shi (JP)**
Inventor: **Tsutsumi, Fumio**
**1, Morigayamacho**
**Yokkaichi-shi (JP)**
Inventor: **Takashima, Akio**
**1, Morigayamacho**
**Yokkaichi-shi (JP)**
Inventor: **Hattori, Iwakazu**
**1, Morigayamacho**
**Yokkaichi-shi (JP)**

(74) Representative: **Tubby, David George et al**
**MARKS & CLERK 57-60 Lincoln's Inn Fields**
**London WC2A 3LS (GB)**

Courier Press, Leamington Spa, England.

## Description

This invention relates to a styrene-butadiene block copolymer comprising at least two styrene-butadiene copolymer blocks differing from each other in their styrene content and in their vinyl content in the butadiene portion, and optionally comprising at least one polybutadiene block.

Recently, owing to an increasing desire for low fuel consumption and good running safety of automobiles, there has developed an increasing desire for a rubber material having low rolling resistance and high wet skid resistance when used as the rubber for tyre treads of automobiles. However, these two characteristics are antagonistic to each mther, and, in addition, it is very difficult to achieve these characteristics and satisfactory wear characteristics at the same time by the use of a single rubber material. Therefore, in order to harmonize these characteristics, use has been made of blends of dissimilar rubber materials. For instance, a blend of styrene-butadiene copolymer rubber containing 10 to 30% by weight of bound styrene and not more than 20% of vinyl configuration (which has a relatively high wet-skid resistance) with a polybutadiene rubber containing not more than 20% of vinyl configuration (which has a low rolling resistance and high wear resistance) has been used as the rubber for tyre treads of automobiles. This blend, however, is unsatisfactory in other characteristics, particularly in its wet skid resistance.

More recently, attempts have been made to improve such wet skid resistance and rolling resistance by modifying butadiene rubber (BR) or styrene-butadiene rubber (SBR) which is obtained by using a polymerization initiator consisting mainly of an organolithium compound. For instance, a rubber composition containing BR rich in vinyl configuration has recently been proposed as a commercial product that can achieve the desired object (GB—A—1,166,832). BR rich in vinyl configuration is indeed able to give a good balance between wet skid resistance and rolling resistance, but it has excessively poor fracture and wear characteristics, so that such a BR can not really be used alone. In order to improve such fracture and wear characteristics, blends with other diene rubbers such as natural rubber (NR), high-cis BR, emulsion-polymerized SBR and the like have been proposed. Blends with NR or high-cis BR, however, have an inferior balance between the wet skid resistance and the fracture and wear charcteristics, while blends with SBR have inferior rolling resistance.

In JP—A—62248/79, there is proposed a way of improving both wet skid resistance and rolling resistance by using a random SBR having a bound styrene content of 20 to 40% by weight and a relatively high vinyl content in the butediene portion. Such a random SBR certainly has an improved balance of wet skid resistance, rolling resistance, wear resistance, etc., as compared with a conventional emulsion-polymerized SBR or SBR obtained by using an organolithium polymerization initiator. However, when it is used alone it is still unsatisfactory in its balance between wet skid resistance and rolling resistance or in its fracture characteristics. Therefore, it must rely on blends with other diene rubbers. However, when blended with other diene rubbers, for example with high-cis BR, its rolling resistance is improved but its wet skid resistance and fracture characteristics are inferior, and a blend with NR has inferior wet skid resistance. A blend with emulsion-polymerized SBR has inferior rolling resistance. Thus, in these blends, the individual features of the respective blend constituents are not fully utilized.

On the other hand, JP—B—37415/74 proposes an A—B type block BR comprising blocks differing in their vinyl contents and an A—B type block SBR comprising blocks differing in their bound styrene contents and in the vinyl contents of their butadiene portions, in order to improve wet skid resistance. However, although this block BR is comparatively well balanced in wet skid resistance and rolling resistance, it has remarkably poor fracture characteristics and is difficult to use alone. This block SBR is relatively well balanced in its wet skid resistance, rolling resistance, wear resistance and processability, as compared with conventional SBR obtained with organolithium initiators, but such an improvement is still unsatisfactory in view of the high performance required by the tyre industry. Thus, the use of said block SBR alone for commercial purposes is difficult.

Chem. Abstr. *87* (22) 1977. No. 169030s discloses a styrene-butadiene two-block copolymer having a total bound styrene content of from 35 to 90% and in which the difference between the styrene contents of the two blocks is at least 50%.

We have now discovered that it is possible to produce a styrene-butadiene block copolymer having excellent wet skid resistance and rolling resistance, a good balance of fracture and wear characteristics and satisfactory processability and cold flow properties (e.g. by using an organolithium polymerization initiator), provided that the total bound styrene content is relatively low (from 10 to 40% by weight), the total vinyl content of the butadiene portion is from 30 to 70%, the copolymer blocks differ from one another in the average vinyl content of their butadiene portions and in their styrene contents and that certain other criteria are observed.

Thus, the present invention consists in a styrene-butadiene block copolymer having a Mooney viscosity ($ML_{1+4}$, 100°C) of from 10 to 150, a total vinyl content in the whole of the bound butadiene of from 30 to 70% and a total bound styrene content of from 10 to 40% by weight, said block copolymer comprising:

(i) a combination of (A) at least one styrene-butadiene random copolymer block having a bound styrene content of from 10 to 50% by weight and a vinyl content of from 25 to 50% in the butadiene portion, and (B) at least one styrene-butadiene random copolymer block having a bound styrene content of from 1 to 30% by weight and a vinyl content of at least 60% in the butadiene portion, block (A) comprising from 10 to 90% by weight of the copolymer; or

(ii) a combination of (A') at least one styrene-butadiene copolymer block having a bound styrene content of from 10 to 50% by weight and a vinyl content of from 10 to 50% in the butadiene portion, (B') at least one styrene-butadiene random copolymer block having a bound styrene content of from 1 to 30% by weight and a vinyl content of at least 60% in the butadiene portion, and (C) at least one polybutadiene block having a vinyl content of from 10 to 50%, each of said blocks (A'), (B') and (C) comprising at least 10% by weight of the copolymer.

The styrene-butadiene block copolymers of this invention are characterized by excellent wet skid resistance, rolling resistance, fracture resistance and wear resistance and improved processability as compared with conventional SBR.

The excellent physical properties of the styrene-butadiene block copolymers of this invention result from the specific phenomenon that the two or three different blocks (A)—(B) or (A')—(B')—(C) having different characteristics and different solubility parameters are surprisingly rendered compatible through vulcanization.

The block copolymers according to this invention, when in the raw rubber state, show different glass transition points corresponding to the respective blocks, but, when vulcanized, they show a single glass transition point and also the temperature-tan δ distribution curve drawn up by a dynamic measuring method has a single peak and is very broad. It should be noted that compositions formed by simply blending said respective blocks (A), (B), etc., are not rendered compatible to such a degree as to give a single glass transition point, so that such compositions are unsatisfactory, particularly in their fracture characteristics, and it is impossible to develop the physical properties of the above block copolymers.

The vinyl content in the respective blocks of the block copolymer (i) of this invention is 25 to 50% preferably 25 to 45%, in the case of block (A) and at least 60%, preferably at least 70%, in the case of block (B), and it is preferable that at least one of said blocks has a vinyl content distribution breadth of at least 20%. By allowing the blocks to have such a vinyl content distribution breadth, the fracture characteristics are improved and the balance between wet skid resistance and rolling resistance becomes better than that of block copolymers having no such distribution breadth.

The term "vinyl content distribution breadth" is used herein to signify a change of vinyl content along one molecular chain. For example, when styrene and butadiene are copolymerized with a catalyst consisting of a combination of an organolithium compound and a Lewis base (such as an ether or an amine) as shown in, for example, JP—A—149,413/81, the vinyl content can be varied by providing a difference between the temperature at the time of initiation of polymerization and that at the time of completion thereof. It is to be noted that, if the vinyl content in the copolymer block (A) exceeds 50%, both fracture characteristics and rolling resistance deteriorate, while, if said vinyl content is less than 25%, it becomes difficult to balance favorably the fracture characteristics, wet skid resistance and rolling resistance. Also, if the vinyl content in the copolymer block (B) is less than 60%, it is hard to balance the wet skid resistance and other characteristics.

The bound styrene content in the respective blocks in the block copolymer (i) of this invention is within the range of 10 to 50% by weight, preferably 15 to 40% by weight, in the copolymer block (A) and 1 to 30% by weight, preferably 5 to 20% by weight, in the copolymer block (B). If the bound styrene content in the copolymer block (A) is less than 10% by weight, unsatisfactory fracture characteristics are provided, whereas, if said styrene content exceeds 50% by weight, the rolling resistance of the copolymer becomes inferior. The same tendency as in the copolymer block (A) can be seen in the bound styrene content of copolymer block (B).

The weight ratio of the copolymer block (A) to the copolymer block (B) is generally within the range of from 1:9 to 9:1. Even when the block copolymer (i) is composed of more than two blocks, such as (A)—(B)—(A) or (B)—(A)—(B), excellent properties can be obtained if the total weight ratio of the copolymer block (A) to the copolymer block (B) defined above is satisfied.

The vinyl content in the respective blocks is the block copolymer (ii) of this invention is 10 to 50%, preferably 20 to 40%, in the copolymer block (A'), at least 60%, preferably at least 70%, in the copolymer block (B'), and 10 to 50%, preferably 20 to 40%, in the polybutadiene block (C). Polymerization using an organolithium initiator cannot normally give a block copolymer with a vinyl content of less than 10%. If the vinyl content in the copolymer block (A') is more than 50%, there results in unsatisfactory rolling resistance, and, if the vinyl content in the copolymer block (B') is less than 60%, the balance provided between wet skid resistance and rolling resistance is unsatisfactory. If the vinyl content in the polymer block (C) is more than 50%, the fracture characteristics and wear characteristics become unsatisfactory.

The bound styrene content in the respective blocks in the block copolymer (ii) of this invention should be within the range of 10 to 50% by weight, preferably 20 to 50% by weight, in the copolymer block (A') and 1 to 30% by weight, preferably 5 to 20% by weight, in the copolymer block (B'). If the bound styrene content in the copolymer block (A') is less than 10% by weight, the resulting block copolymer has unsatisfactory fracture characteristics, and if the bound styrene content is more than 50% by weight the rolling resistance becomes inferior. The same tendency is seen in the copolymer block (B').

Each of the polymer blocks is present in an amount of at least 10% by weight in the block copolymer (ii) of this invention, and it is particularly desirable that the copolymer block (A') should be present in an amount of at least 40% by weight. Too low a proportion of copolymer block (A') results in poor fracture and wear characteristics, while too low a proportion of polymer block (C) deteriorates the rolling resistance, and too low a proportion of copolymer block (B') impairs the wet skid resistance.

In block copolymers (i) and (ii) of this invention, the total vinyl content of the whole bound butadiene should be 30 to 70%, and the total styrene content should be within the range of 10 to 40% by weight. If said contents are outside the above-defined ranges, it becomes impossible to secure the required balance among the fracture characteristics, the rolling resistance, the wear characteristics and the wet skid resistance.

Coupling of said block copolymers (i) and (ii) with a metallic halide results in an improvement in such characteristics as processability, fracture characteristics and the like, and such an improvement is most noticeable when the coupling efficiency is more than 20%.

For producing a styrene-butadiene block copolymer according to this invention, first a copolymer or homopolymer block (A), (A'), (B), (B') or (C) is formed by polymerization and then the other blocks are formed by polymerization. The vinyl content in the copolymer blocks can be varied by changing the amount of the microstructure controlling agent or by changing the mean polymerization temperature without changing the amount of said microstructure controlling agent in the course of the polymerization of the respective copolymer blocks. Also, the bound styrene content can be changed by adjusting the styrene-butadiene monomer feed.

An organolithium compound may be used as polymerization initiator in the polymerization. Various types of ethers and amines may be used as the controlling agent for the vinyl content in the butadiene portion, and various types of ethers, amines and anionic surface active agents having a —SO$_3$M or —OSO$_3$M group (M representing Na, K, Rb or Cs) may be used as the randomizing agent for styrene.

Examples of organolithium compounds usable as polymerization initiator in this invention are methyllithium, ethyllithium, n-butyllithium, sec-butyllithium, tert-butyllithium, phenyllithium, tetramethylenedilithium, pentamethylenedilithium and decamethylenedilithium.

As the microstructure controlling agent, there may be used ether compounds and tertiary amines alone or in combination. Examples of such ether compounds and tertiary amines are diethyl ether or thioether, amyl ethyl ether, octyl ethyl ether, tetrahydrofuran, dioxane, ethylene glycol dimethyl ether, diethylene glycol dimethyl ether, triethylene glycol dimethyl ether, triethylamine, N,N,N',N'-tetramethylethylenediamine, triethylenediamine and N-methylmorpholine. These compounds can also serve as a styrene randomizing agent.

As well as said ethers and amines, there may be also used as randomizing agent an anionic surface active agent having an —SO$_3$M or —OSO$_3$M group (M representing Na, K, Rb or Cs). Examples of such surfactants are alkylaryl-sulphonates, amide-bonded sulphonates, ester-bonded sulphonates and ester-bonded sulphuric ester salts such as are disclosed in JP—B—44315/79. Benzene, toluene, xylene, cyclohexane, hexane and heptane may be used as polymerization solvent.

The polymerization temperature is important for deciding the vinyl content in the butadiene portion. When the polymerization uses an organolithium compound and an ether or an amine, the vinyl content is influenced by the polymerization temperature; thus a low polymerization temperature leads to a high vinyl content and a high polymerization temperature leads to a low vinyl content. Usually the polymerization is carried out at a temperature within the range of 0° to 150°C. It is desirable to allow a sufficient range of polymerization temperature to provide the required vinyl content distribution breadth in the blocks.

Metallic halides are used as the coupling agent for the coupling reaction. Preferred examples of such metallic halides are the compounds represented by the following formulae (1), (2) and (3):

(1) R$_n$MX$_{4-n}$

(2) M'X$_2$

(3) X$_3$M—R'—MX$_3$ or X$_2$RM—R'—MRX$_2$

wherein M is Si, Ge, Sn or Pb; M' is Sn or Pb; X is chlorine, bromine or iodine; R is an alkyl, allyl or aryl group; R' is an alkylene or aryl group; and n is 0, 1 or 2. Examples of such compounds are silicon tetrachloride, silicon tetrabromide, germanium tetrachloride, germanium tetrabromide, tin tetrachloride, tin dichloride, lead dichloride and dimethyldicyclosilane.

The mode of bonding between the block copolymer and the metal of the coupling agent is preferably such that a butadienyl-metal bond is formed. Also, in the block copolymers of this invention, it is desirable that the molecule terminal of the polymer having metal-carbon bonds in the molecular chain is a copolymer block with a low styrene content because such a structure provides a copolymer with better characteristics such as lower rolling resistance.

The styrene-butadiene block copolymers of this invention have markedly improved wet skid resistance, rolling resistance, fracture and wear characteristics as well as processability and cold flow characteristics, compared with conventional SBR (obtained by using chiefly an organolithium compound as polymerization initiator), and thus they can serve as an excellent copolymer rubber.

By utilizing said characteristics, the block copolymers of this invention can be used, either alone or in blends with other rubbers, for the fabrication of tyres and other industrial products.

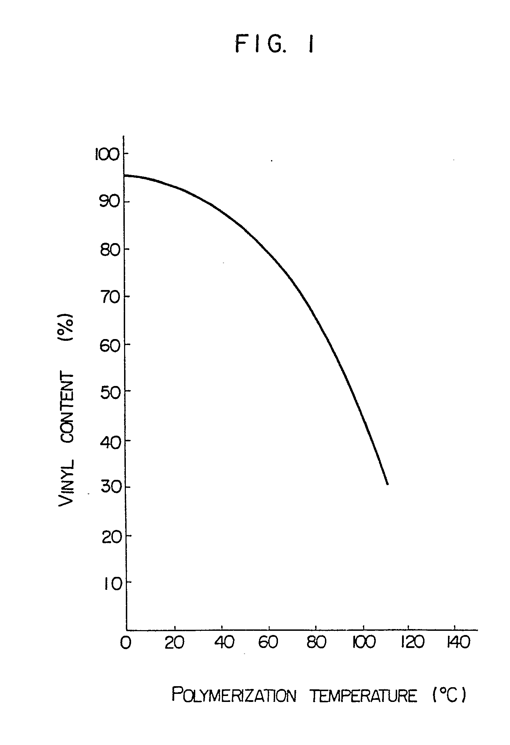

The present invention is further described below with reference to the Examples and the accompanying drawing.

The drawing is a graph showing the relation between polymerization temperature and vinyl content in the polymerization of the copolymer blocks (B) in Example 1.

In the Examples, the wet skid resistance measured by a skid tester was adopted as an index of wet skid resistance of the products, and the impact resilience at 70°C and heat-build-up temperature as measured by a Goodrich flexometer were used as an index of rolling resistance.

Examples 1—10 and Comparative Examples 1—10

A 5 litre reactor was charged with 2,500 g of a cyclohexane/n-hexane (90/10 by weight) mixture and with predetermined quantities of styrene, butadiene, tetrahydrofuran and potassium dodecylbenzenesulphonate in a nitrogen atmosphere and the mixture was polymerized isothermally or adiabatically within the temperature range shown in the column headed "Copolymer block (A) polymerization conditions" in Table 1, using n-butyllithium as polymerization initiator. Comparative Examples 8—10 are random SBR's which were not subjected to polymerization of the copolymer blocks (B). After the polymerization conversion had reached 95 to 100%, predetermined quantities of butadiene, styrene and diethylene glycol dimethyl ether were additionally supplied and the mixture was polymerized within the temperature range shown in the column headed "Copolymer block (B) polymerization conditions" in Table 1. Upon completion of the polymerization, 2,6-di-tert-butyl-p-cresol was added in an amount of 0.7 part by weight to 100 parts by weight of the polymer. After removing the solvent by steam stripping, the residue was dried on 100°C rolls to obtain a polymer. The properties of the polymers thus obtained are shown in Table 2. The microstructure of the butadiene portion in each polymer was determined according to D. Morero's method, and the styrene content in the copolymer was determined from the calibration curve using the absorbance at 699 cm$^{-1}$. The accompanying drawing shows the relation between polymerization temperature and microstructure under the copolymer block (B) polymerization conditions in Example 1. In the adiabatic polymerization of the copolymer blocks (B) at a polymerization temperature within the range of 35—80°C, the vinyl content distribution breadth was about 25%.

The polymers were mixed and compounded by an internal mixer and rolls with the recipe shown in Table 3 and then vulcanized at 145°C for 30 minutes.

The properties of the vulcanizates are shown in Table 4.

The styrene-butadiene block copolymer of Example 1 had higher wet skid resistance, tensile strength, impact resilience and wear resistance than the random SBR of Comparative Example 8 which had almost the same vinyl contents and bound styrene contents as those of the copolymer of Example 1. The copolymer of Example 1 also had excellent roll retention of the compounded rubber. The copolymers of Examples 2—10 were also excellent in the above-mentioned properties.

Comparative Examples 1, 3 and 5 were inferior to Example 1 in wet skid resistance; Comparative Examples 2, 4 and 6 were inferior in heat build-up and wear resistance; and Comparative Example 7 was inferior in impact resilience and heat build-up. Example 1 provided with said vinyl content distribution breadth had higher tensile strength and wet skid resistance than Comparative Example 7 which had no vinyl content distribution breadth. Also, as can be seen from the results obtained from the Comparative Example 9/Comparative Example 10 (1/1) blend, simple blends of copolymers cannot develop the excellent properties possessed by the block copolymers of this invention.

Examples 11—17 and Comparative Examples 11—19

A 5 litre reactor was charged with 2,500 g of a cyclohexane/n-hexane (90/10 by weight) mixture and with predetermined quantities of a monomer and an ether in a nitrogen atmosphere and polymerized under the block (C) polymerization conditions shown in Table 5. After the polymerization conversion had reached 95—100%, predetermined amounts of monomer, ether and potassium dodecylbenzenesulphonate were further supplied and the mixture was polymerized under the block (A') polymerization conditions. After the polymerization conversion had reached 95—100%, further predetermined amounts of a monomer and an ether were added to the polymerization mixture, which was then polymerized under the block (B') polymerization conditions. The random SBR's of Comparative Examples 15—18 were polymerized with single feed of monomer and ether.

After completion of the polymerization, 2,6-di-tert-butyl-p-cresol was added in an amount of 0.7 part by weight to 100 parts by weight of the polymer, and, after removing the solvent by steam stripping, the residue was dried on 100°C rolls to obtain a polymer. The properties of the polymers thus obtained are shown in Table 6. The microstructure of the butadiene portion of the polymer was determined according to D. Morero's method, and the styrene content in the copolymer was determined from the calibration curve using the absorbance at 699 cm$^{-1}$.

The polymers obtained were mixed and compounded using an internal mixer and rolls with the recipe of Table 3 and vulcanized at 145°C for 30 minutes. The properties of the vulcanizates are shown in Table 7.

The block SBR's of Examples 11—17 showed a better roll retention than the random SBR of Comparative Example 15 and also had excellent wet skid resistance, impact resilience, Lambourn wear and tensile strength. Comparative Example 11 was inferior to Examples 11—17 in tensile strength and wet skid resistance, and Comparative Examples 12, 13 and 14 had low impact resilience and high heat build-up.

A simple blend of the respective blocks (Blend 1) was unable to develop the properties of the block copolymers of this invention. Also, blends of the (A')—(C) or (A')—(B') block polymers with random SBR having the same amounts of bound styrene and vinyl configuration as (B') or (C), respectively, were incapable of acquiring the properties possessed by the (A')—(B')—(C) type block polymers.

TABLE 1

| Example | Copolymer block (A) polymerization conditions | | | | | Copolymer block (B) polymerization conditions | | | (A)/(B) (wt. ratio) | Remarks |
|---|---|---|---|---|---|---|---|---|---|---|
| | Butadiene/ styrene (g) | n-BuLi[1] (g) | Tetra-hydro-furan (g) | Potassium dodecyl-benzene-sulphonate (g) | Polymeri-zation tempera-ture (°C) | Butadiene/ styrene (g) | Diglyme[2] (g) | Polymeriza-tion tempera-ture (°C) | | |
| Example 1 | 188/62 | 0.35 | 2.0 | 0.1 | 35 | 225/25 | 220 | 35—80 | 1/1 | |
| 2 | " | 0.31 | " | " | " | " | 0.60 | 35—80 | " | |
| 3 | " | 0.36 | 5.0 | " | " | " | 2.25 | 35—80 | " | |
| 4 | 163/87 | 0.38 | 2.5 | " | " | " | 2.30 | 35—80 | " | |
| 5 | 188/62 | 0.34 | 2.0 | " | " | 237.5/12.5 | 2.15 | 35—80 | " | |
| 6 | " | 0.31 | 2.0 | 0.1 | 20—50 | " | 1.91 | 50—90 | " | |
| 7 | " | 0.33 | " | " | 35 | " | 0.50 | 35 | " | |
| 8 | 250/83 | 0.35 | " | " | 20—60 | 150/17 | 4.30 | 60—75 | 2/1 | |
| 9 | 322/108 | 0.38 | 1.8 | " | 10—60 | 64/7 | 2.30 | 60 | 6/1 | |
| 10 | 125/42 | 0.30 | " | " | 30 | 300/33 | 0.61 | 30—85 | 1/2 | |

TABLE 1 (contd.)

| | Copolymer block (A) polymerization conditions | | | | | Copolymer block (B) polymerization conditions | | | | |
|---|---|---|---|---|---|---|---|---|---|---|
| | Butadiene/ styrene (g) | n-BuLi*1 (g) | Tetra-hydro-furan (g) | Potassium dodecyl-benzene-sulphonate (g) | Polymeri-zation tempera-ture (°C) | Butadiene/ styrene (g) | Diglyme*2 (g) | Polymeriza-tion tempera-ture (°C) | (A)/(B) (wt. ratio) | Remarks |
| Comparative Example 1 | 225/25 | 0.29 | — | 0.16 | 50 | 225/25 | 0.60 | 50—90 | 1/1 | |
| 2 | 188/62 | 0.32 | 2.0 | — | 35 | " | 0.63 | 35—80 | " | |
| 3 | 237.5/12.5 | 0.31 | 1.5 | — | " | " | 2.10 | 35—80 | " | |
| 4 | 100/150 | 0.37 | 5.0 | 0.1 | " | " | 2.28 | 35—80 | " | |
| 5 | 188/62 | 0.35 | 2.0 | " | " | " | 0.30 | 35—80 | " | |
| 6 | 200/50 | 0.37 | " | " | " | 150/100 | 2.25 | 35—80 | " | |
| 7 | 213/37 | 0.28 | — | 0.15 | 50 | 200/50 | 0.61 | 55 | " | |
| 8 | 410/90 | 0.28 | — | 0.1 | 50 | — | 0.29 | 50 | — | Random SBR |
| 9 | 450/50 | 0.25 | — | — | " | — | 0.60 | 50 | — | " |
| 10 | 375/125 | 0.27 | 2.0 | 0.1 | " | — | — | 50 | — | " |

Note:
Solvent: cyclohexane/n-hexane (90/10 by weight), 2,500 g.
*1: n-BuLi=n-butyllithium
*2: Diglyme=diethylene glycol dimethyl ether

TABLE 2

| Example | Block (A) | | | Block (B) | | | Whole polymer | | | (A)/(B) (wt. ratio) |
|---|---|---|---|---|---|---|---|---|---|---|
| | Vinyl content in butadiene portion (%) | Bound styrene (%) | Presence or absence of vinyl content distribution breadth | Vinyl content in butadiene portion (%) | Bound styrene (%) | Presence or absence of vinyl content distribution breadth | Vinyl content in butadiene portion (%) | Bound styrene (%) | ML$_{1.4}^{100°C}$ | |
| 1 | 32 | 25 | Absent | 81 | 11 | Present | 58 | 18 | 49 | 1/1 |
| 2 | 31 | 26 | " | 74 | 10 | " | 54 | 18 | 51 | " |
| 3 | 41 | 25 | " | 82 | 10 | " | 63 | 17 | 53 | " |
| 4 | 30 | 35 | " | 81 | 11 | " | 61 | 23 | 48 | " |
| 5 | 31 | 25 | " | 80 | 5 | " | 59 | 15 | 49 | " |
| 6 | 31 | 27 | Present | 75 | 10 | " | 55 | 19 | 50 | " |
| 7 | 31 | 28 | Absent | 81 | 11 | Absent | 58 | 20 | 47 | " |
| 8 | 30 | 25 | Present | 80 | 11 | Present | 49 | 20 | 53 | 2/1 |
| 9 | 29 | 26 | " | 80 | 10 | Absent | 38 | 24 | 51 | 6/1 |
| 10 | 31 | 27 | Absent | 74 | 10 | Present | 61 | 16 | 54 | 1/2 |
| Comparative Example 1 | 15 | 10 | " | 65 | 30 | " | 37 | 20 | 48 | 1/1 |
| 2 | 62 | 25 | " | 76 | 11 | " | 69 | 18 | 47 | " |
| 3 | 30 | 5 | " | 80 | 15 | " | 54 | 10 | 55 | " |
| 4 | 31 | 58 | " | 80 | 10 | " | 67 | 34 | 53 | " |
| 5 | 32 | 26 | " | 55 | 10 | " | 45 | 18 | 51 | " |
| 6 | 31 | 20 | " | 72 | 38 | " | 48 | 29 | 47 | " |
| 7 | 15 | 15 | " | 80 | 20 | Absent | 47 | 18 | 51 | 1/1 |
| 8 | 60 | 18 | " | — | — | — | 60 | 18 | 48 | — |
| 9 | 80 | 10 | " | — | — | — | 80 | 10 | 49 | — |
| 10 | 31 | 26 | " | — | — | — | 31 | 26 | 50 | — |

0 054 440

# 0 054 440

## TABLE 3

|  | Parts by weight |
|---|---|
| Styrene-butadiene block copolymer | 100 |
| Carbon black (ISAF) | 50 |
| Aromatic process oil *3 | 10 |
| Zinc oxide | 4 |
| Stearic acid | 2 |
| Accelerator MSA *1 | 0.54 |
| DM *2 | 0.86 |
| Sulphur | 2.0 |

Note:
*1: N-oxydiethylene-2-benzothiazylsulphenamide (produced by Ouchi Shinko Kagaku Kogyo Co., Ltd., Japan)
*2 Dibenzothiazyl disulphide (produced by Ouchi Shinko Kagaku Kogyo Co., Ltd., Japan)
*3 High aromatic process oil (produced by Japan Synthetic Rubber Co., Ltd.)

TABLE 4

| Example | 1)<br>300% modulus<br>(kg · f/cm²) | Tensile<br>strength<br>(kg · f/cm²) | Elonga-<br>tion<br>(%) | Hardness<br>(JIS-A) | 2)<br>Dunlop impact<br>resilience<br>at 70°C (%) | 3)<br>Heat-build<br>up tempera-<br>ture ΔT(°C) | 4)<br>Wet skid<br>(index) | 5)<br>Lambourn<br>wear<br>(index) | 6)<br>Roll retention<br>of compounded<br>rubber |
|---|---|---|---|---|---|---|---|---|---|
| 1 | 155 | 227 | 400 | 70 | 70 | 20 | 120 | 105 | Good |
| 2 | 153 | 230 | 410 | 69 | 71 | 19 | 110 | 110 | " |
| 3 | 161 | 231 | 390 | 71 | 69 | 20 | 125 | 105 | " |
| 4 | 162 | 235 | 420 | 71 | 68 | 20 | 125 | 100 | Excellent |
| 5 | 153 | 223 | 410 | 69 | 71 | 19 | 110 | 105 | Good |
| 6 | 160 | 235 | 420 | 70 | 70 | 19 | 115 | 110 | " |
| 7 | 155 | 220 | 400 | 71 | 70 | 20 | 105 | 105 | " |
| 8 | 158 | 240 | 430 | 69 | 71 | 19 | 105 | 120 | Excellent |
| 9 | 148 | 243 | 420 | 70 | 71 | 19 | 105 | 125 | Good |
| 10 | 165 | 216 | 390 | 72 | 68 | 21 | 130 | 105 | " |

TABLE 4

| | 1) 300% modulus (kg · f/cm²) | Tensile strength (kg · f/cm²) | Elonga-tion (%) | Hardness (JIS-A) | 2) Dunlop impact resilience at 70°C (%) | 3) Heat-build up tempera-ture ΔT(°C) | 4) Wet skid (index) | 5) Lambourn wear (index) | 6) Roll retention of compounded rubber |
|---|---|---|---|---|---|---|---|---|---|
| Comparative Example 1 | 163 | 217 | 420 | 68 | 68 | 20 | 95 | 105 | " |
| 2 | 168 | 205 | 370 | 73 | 65 | 23 | 150 | 90 | Fair |
| 3 | 140 | 200 | 380 | 70 | 72 | 19 | 90 | 105 | " |
| 4 | 165 | 240 | 390 | 72 | 63 | 25 | 150 | 100 | Excellent |
| 5 | 155 | 235 | 410 | 70 | 71 | 19 | 95 | 120 | Good |
| 6 | 160 | 225 | 400 | 72 | 64 | 24 | 140 | 95 | " |
| 7 | 158 | 210 | 400 | 69 | 67 | 22 | 105 | 100 | " |
| 8 | 160 | 212 | 400 | 69 | 68 | 21 | 100 | 100 | Fair |
| Comp. Ex. 9/ Comp. Ex. 10 blend (1/1) | 150 | 205 | 400 | 70 | 67 | 21 | 105 | 95 | Fair-Bad |

Note:
    1) Measured according to JIS-K-6301.
    2) Measured according to B.S-903 Part 22 method.
    3) Goodrich heat build-up, measured according to ASTM-D-623/58 (Method A).
    4) Measured on the indoor wet asphalt road surface by using a skid tester made by Stanley Inc., of Britain. The value obtained from Comparative Example 8 was expressed as 100 by way of a reference Index. The greater the figure, the better.
    5) Measured by a Lambourn-wear tester at slip rate of 30% and at 25°C. The value obtained from Comparative Example 8 was expressed as 100 by way of a reference index. The greater the figure, the better.
    6) Roll retention of the compound mixed by an internal mixer was expressed by four-grade rating (Excellent, Good, Fair and Bad).

TABLE 5

| Example | n-BuLi*1 (g) | Block (C) polymerization conditions | | | Block (A') polymerization conditions | | | Block (B') polymerization conditions | | | (C)/(A')/(B') (wt. ratio) | Remarks |
|---|---|---|---|---|---|---|---|---|---|---|---|---|
| | | Butadiene (g) | Tetra-hydro-furan (g) | Polymeriza-tion tem-perature (°C) | Butadiene/ styrene (g) | Tetra-hydro-furan/ DBS-K*3 (g) | Polyme-rization tempera-ture (°C) | Butadiene/ styrene (g) | Diglyme*2 (g) | Polymeri-zation temperature (°C) | | |
| 11 | 0.33 | 125 | 1.5 | 40 | 188/62 | 2.5/0.1 | 40 | 113/12 | 1.4 | 40—60 | 1/3/1 | |
| 12 | 0.31 | " | " | " | 162/88 | 3.0/0.1 | " | " | 1.3 | " | " | |
| 13 | 0.30 | " | " | " | 175/75 | 5.0/0.1 | " | " | 1.3 | " | " | |
| 14 | 0.32 | " | " | " | " | " | " | " | 3.3 | " | " | |
| 15 | 0.29 | " | " | " | " | 5.0 | " | " | 1.2 | " | " | |
| 16 | 0.31 | 167 | " | " | 117/50 | 6.0/0.1 | " | 150/17 | 1.3 | " | 1/1/1 | |
| 17 | 0.30 | 83 | " | " | 234/100 | " | " | 75/8 | 1.3 | 50 | 1/4/1 | |
| Comparative Example 11 | 0.34 | 0 | — | — | 212/38 | —/0.2 | " | 175/75 | 1.0 | 40—70 | 1/1((A')/(B')) | |
| 12 | 0.36 | 125 | 1.5 | 40 | 100/150 | 7.5/0.1 | " | 119/6 | 1.2 | 40—60 | 1/2/1 | |
| 13 | 0.29 | " | 1.5 | 40 | 175/75 | 5.0/0.1 | 40 | 81/44 | 3.0 | 40—60 | 1/2/1 | |
| 14 | 0.32 | " | 1.5 | " | 175/75 | 20/— | " | 113/12 | 1.3 | " | " | |
| 15 | 0.31 | 415/85 | — | — | — | 7.5/0.1 | 40—50 | — | — | — | — | |
| 16 | 0.28 | 500/0 | 1.5 | 40 | — | 1.5 | 40 | — | — | — | — | |
| 17 | 0.32 | 350/150 | — | — | — | 5/0.1 | 40 | — | — | — | — | |
| 18 | 0.31 | 450/50 | — | — | — | — | — | — | 0.7 | 50 | — | |
| 19 | 0.31 | 250 | 1.5 | 40 | 187/63 | 2.5/0.1 | 40 | — | — | — | 1/1((C)/(A')) | |

Note:
Solvent: cyclohexane/n-hexane (90/10 by weight), 2,500 g.
*1 n-BuLi=n-butyllithium.
*2 Diglyme=diethylene glycol dimethyl ether.
*3 Potassium dodecylbenzenesulphonate

0 054 440

TABLE 6

| Example | Block (C) | | Block (A') | | Block (B') | | Whole polymer | | $ML_{1+4}^{100°C}$ | (C)/(A')/(B') (wt. ratio) | Remarks |
|---|---|---|---|---|---|---|---|---|---|---|---|
| | Vinyl content in butadiene portion (%) | Bound styrene (%) | Vinyl content in butadiene portion (%) | Bound styrene (%) | Vinyl content in butadiene portion (%) | Bound styrene (%) | Vinyl content in butadiene portion (%) | Bound styrene (%) | | | |
| 11 | 30 | 0 | 31 | 25 | 77 | 10 | 43 | 15 | 51 | 1/2/1 | |
| 12 | 31 | 0 | 30 | 36 | 78 | 11 | 44 | 20 | 50 | " | |
| 13 | 29 | 0 | 41 | 29 | 77 | 10 | 47 | 17 | 48 | " | |
| 14 | 30 | 0 | 40 | 30 | 85 | 10 | 49 | 18 | 52 | " | |
| 15 | 31 | 0 | 40 | 31 | 78 | 11 | 47 | 18 | 50 | " | |
| 16 | 30 | 0 | 40 | 30 | 79 | 10 | 49 | 13 | 51 | 1/1/1 | |
| 17 | 29 | 0 | 39 | 31 | 77 | 11 | 44 | 22 | 52 | 1/4/1 | |
| Comparative Example 11 | — | — | 13 | 15 | 65 | 27 | 36 | 21 | 55 | 1/1((A')/(B')) | |
| 12 | 30 | 0 | 40 | 60 | 77 | 5 | 49 | 31 | 51 | 1/2/1 | |
| 13 | 32 | 0 | 40 | 31 | 78 | 35 | 45 | 24 | 49 | 1/2/1 | |
| 14 | 29 | 0 | 60 | 30 | 77 | 10 | 55 | 17 | 50 | " | |
| 15 | 47 | 17 | — | — | — | — | 47 | 17 | 58 | — | Random SBR |
| 16 | 31 | 0 | — | — | — | — | 31 | 0 | 49 | — | " |
| 17 | 40 | 31 | — | — | — | — | 40 | 31 | 52 | — | " |
| 18 | 78 | 10 | — | — | — | — | 78 | 10 | 51 | — | " |
| 19 | 30 | 0 | 31 | 25 | — | — | 30 | 17 | 50 | 1/2((C)/(A')) | |

TABLE 7

| Example | 1)<br>300%<br>modulus<br>(kg · f/cm²) | Tensile<br>strength<br>kg · f/cm²) | Elonga-<br>tion<br>(%) | Hardness<br>(JIS-A) | 2)<br>Dunlop impact<br>resilience<br>at 70°C (%) | 3)<br>Heat-build up<br>temperature<br>ΔT (°C) | 4)<br>Wet<br>skid<br>(index) | 5)<br>Lambourn<br>wear<br>(index) | 6) Roll<br>retention of<br>compounded<br>rubber |
|---|---|---|---|---|---|---|---|---|---|
| 11 | 151 | 230 | 410 | 67 | 73 | 18 | 105 | 110 | Good |
| 12 | 155 | 233 | 420 | 68 | 71 | 20 | 115 | 110 | Excellent |
| 13 | 157 | 235 | 420 | 68 | 72 | 19 | 110 | 115 | ″ |
| 14 | 158 | 229 | 400 | 69 | 71 | 20 | 115 | 110 | ″ |
| 15 | 156 | 237 | 420 | 68 | 72 | 19 | 110 | 110 | ″ |
| 16 | 148 | 225 | 420 | 69 | 73 | 18 | 105 | 110 | Good |
| 17 | 153 | 240 | 410 | 67 | 71 | 20 | 110 | 120 | Excellent |
| Comparative<br>Example<br>11 | 160 | 215 | 420 | 68 | 68 | 20.5 | 95 | 105 | Good |
| 12 | 163 | 230 | 380 | 71 | 62 | 25 | 140 | 95 | ″ |
| 13 | 160 | 220 | 390 | 71 | 63 | 24 | 140 | 95 | ″ |
| 14 | 165 | 225 | 390 | 70 | 65 | 23 | 130 | 95 | ″ |
| 15 | 145 | 215 | 410 | 67 | 68 | 20.5 | 100 | 100 | Fair-Bad |
| Blend[7] 1 | 141 | 205 | 400 | 67 | 66 | 21.5 | 100 | 95 | Bad |
| Blend[8] 2 | 156 | 205 | 410 | 68 | 69 | 20 | 90 | 100 | Fair-Bad |
| Blend[9] 3 | 153 | 207 | 400 | 69 | 68 | 21 | 95 | 100 | ″ |

0 054 440

Note:
1) Measured according to JIS-K-6301.
2) Measured according to B.S-903 Part 22 method.
3) Goodrich heat build-up measured according to ASTM D-623/58 (Method A).
4) Measured on the indoor wet asphalt road surface at 25°C by using a skid tester made by Stanley Inc., of Britain. The value of Comparative Example 16 was expressed as 100 by way of a reference index. The greater the figure, the better.
5) Measured by Lambourn wear tester at a slip rate of 30% and at 25°C. The value of Comparative Example 7 was expressed as 100 by way of a reference index. The greater the figure, the better.
6) Roll retention of the compound mixed by an internal mixer was expressed by four-grade rating (Excellent, Good, Fair and Bad).
7) Comp. Ex. 16, Comp. Ex. 17 and Comp. Ex. 18 were blended at a ratio of 1/2/1.
8) Comp. Ex. 11 and Comp. Ex. 16 were blended at a ratio of 2/1.
9) Comp. Ex. 18 and Comp. Ex. 19 were blended at a ratio of 1/2.

**Claims**

1. A styrene-butadiene block copolymer having a Mooney viscosity ($ML_{1+4}$, 100°C) of from 10 to 150, a total vinyl content in the whole of the bound butadiene of from 30 to 70% and a total bound styrene content of from 10 to 40% by weight, said block copolymer comprising:
(i) a combination of (A) at least one styrene-butadiene random copolymer block having a bound styrene content of from 10 to 50% by weight and a vinyl content of from 25 to 50% in the butadiene portion, and (B) at least one styrene-butadiene random copolymer block having a bound styrene content of from 1 to 30% by weight and a vinyl content of at least 60% in the butadiene portion, block (A) comprising from 10 to 90% by weight of the copolymer; or
(ii) a combination of (A') at least one styrene-butadiene copolymer block having a bound styrene content of from 10 to 50% by weight and a vinyl content of from 10 to 50% in the butadiene portion, (B') at least one styrene-butadiene random copolymer block having a bound styrene content of from 1 to 30% by weight and a vinyl content of at least 60% in the butadiene portion, and (C) at least one polybutadiene block having a vinyl content of from 10 to 50%, each of said blocks (A'), (B') and (C) comprising at least 10% by weight of the copolymer.

2. A copolymer according to Claim 1, comprising a combination of said blocks (A) and (B).

3. A copolymer according to Claim 2, in which the vinyl content of said block (A) is from 25 to 45% and of said block (B) is at least 70%, and in which the bound styrene content of said block (A) is from 15 to 40% by weight and of said block (B) is from 5 to 20% by weight.

4. A copolymer according to Claim 1, comprising a combination of said blocks (A'), (B') and (C).

5. A copolymer according to Claim 4, in which the vinyl content of said block (A') is from 20 to 40%, of said block (B') is at least 70% and of said block (C) is from 20 to 40%, and in which the bound styrene content of said block (A') is from 20 to 50% by weight and of said block (B') is from 5 to 20% by weight.

6. A copolymer according to any one of Claims 1 to 5, in which at least one of said blocks has a vinyl content distribution breadth of at least 20%.

7. A copolymer according to any one of Claims 1 to 6, in which the molecules of the block copolymer are coupled with a coupling agent at a coupling efficiency of at least 20%.

8. A copolymer according to Claim 7, in which the coupling agent is a halide of silicon, germanium, tin or lead.

**Patentansprüche**

1. Ein Styrol-Butadien-Block-Copolymer mit einer Mooney Viskosität ($ML_{1+4}$, 100°C) von 10 bis 150, mit einem Gesmatvinylgehalt im gesamten, gebundenen Butadien von 30 bis 70% und einem Gesamtgehalt an gebundenem Styrol von 10 bis 40 Gew.-%, wobei das Block-Copolymer umfasst:
i) eine Kombination von (A) mindestens einem statistisch gebildeten Styrol-Butadien-Copolymer-Block mit einem gebundenen Styrolgehalt von 10 bis 50 Gew.-% und einem Vinylgehalt von 25 bis 50% im Butadienteil und (B) mindestens einem statistisch gebildeten Styrol-Butadien-Copolymer-Block mit einem gebundenen Styrolgehalt von 1 bis 30 Gew.-% und einem Vinylgehalt von mindestens 60% im Butadienteil, wobei der Block (A) von 10 bis 90 Gew.-% des Copolymers enthält; oder
ii) eine Kombination von (A') mindestens einem Styrol-Butadien-Copolymer-Block mit einem gebundenen Styrolgehalt von 10 bis 50 Gew.-% und einem Vinylgehalt von 10 bis 50% in dem Butadienteil, (B') mindestens einem statistisch gebildeten Styrol-Butadien-Copolymer-Block mit einem gebundenen Stryolgehalt von 1 bis 30 Gew.-% und einem Vinylgehalt von mindestens 60% im Butadienteil, und (C) mindestens einem Polybutadienblock mit einem Vinylgehalt von 10 bis 50%, wobei jeder der Blöcke (A'), (B') und (C) mindestens 10 Gew.-% des Copolymers enthält.

2. Copolymer gemäß Anspruch 1, welches eine Kombination Blöcke (A) und (B) umfaßt.

3. Copolymer gemäß Anspruch 2, bei dem der Vinylgehalt des Blockes (A) von 25 bis 45% beträgt und derjenige des Blockes (B) mindestens 70% beträgt und bei dem der gebundene Styrolgehalt des Blockes (A) von 15 bis 40 Gew.-% beträgt und derjenige des Blockes (B) von 5 bis 20 Gew.-% beträgt.

4. Copolymer gemäß Anspruch 1, welches eine Kombination der Blöcke (A'), (B') und (C) umfaßt.

5. Copolymer gemäß Anspruch 4, bei dem der Vinalgehalt des Blockes (A') von 20 bis 40% beträgt und derjenige des Blockes (B') mindestens 70% und derjenige des Blockes (C) von 20 bis 40% und bei dem der Gehalt an gebundenem Styrol des Blockes (A') von 20 bis 50 Gew.-% beträgt und derjenige des Blockes (B') von 5 bis 20 Gew.-%.

6. Copolymer gemäß einem der Ansprüche 1 bis 5, bei dem mindestens einer der Blöcke eine Vinylgehalt-Verteilungsbreite von mindestens 20% besitzt.

7. Copolymer gemäß einem der Ansprüche 1 bis 6, bei dem die Moleküle des Block-Copolymers mittels eines Kopplungsmittels mit einem Koppelungswirkungsgrad von mindestens 20% gekoppelt sind.

8. Copolymer gemäß Anspruch 7, bei dem das Kopplungsmittels ein Silizium-, Germanium-, Zinn- oder Bleihalogenid ist.

## Revendications

1. Copolymère séquencé butadiène-styrène ayant une viscosité Mooney ($ML_{1+4}$, 100°C) comprise entre 10 et 150, une teneur totale en groupes vinyle dans la totalité du butadiène fixé comprise entre 30 et 70% et une teneur totale en styrène fixé comprise entre 10 et 40% en poids, le copolymère séquencé comprenant:

(i) une combinaison de (A) au moins une séquence de copolymère statistique butadiène-styrène ayant une teneur en styrène fixé comprise entre 10 et 50% en poids et une teneur en groupes vinyle comprise entre 25 et 50% dans la partie butadiène, et (B) au moins une séquence de copolymère statistique butadiène-styrène ayant une teneur en styrène fixé comprise entre 1 et 30% en poids et une teneur en groupes vinyle d'au moins 60% dans la partie butadiène, la séquence (A) représentant de 10 à 90% en poids du copolymère; ou

(ii) une combinaison de (A') au moins une séquence de copolymère butadiène-styrène ayant une teneur en styrène fixé comprise entre 10 et 50% en poids et une teneur en groupes vinyle comprise entre 10 et 50% dans la partie butadiène, (B') au moins une séquence de copolymère statistique butadiène-styrène ayant une teneur en styrène fixé comprise entre 1 et 30% en poids et une teneur en groupes vinyle d'au moins 60% dans la partie butadiène, et (C) au moins une séquence de polybutadiène ayant une teneur en groupes vinyle comprise entre 10 et 50%, chacune des séquences (A'), (B') et (C) représentant au moins 10% en poids du copolymère.

2. Copolymère selon la revendication 1, comprenant une combinaison des séquences (A) et (B).

3. Copolymère selon la revendication 2, dans lequel la teneur en groupes vinyle de la séquence (A) est comprise entre 25 et 45% en celle de la séquence (B) est d'au moins 70%, et dans lequel la teneur en styrène fixé de la séquence (A) est comprise entre 15 et 40% en poids et celle de la séquence (B) est comprise entre 5 et 20% en poids.

4. Copolymère selon la revendication 1, comprenant une combinaison des séquences (A'), (B') et (C).

5. Copolymère selon la revendication 4, dans lequel la teneur en groupes vinyle de la séquence (A') est comprise entre 20 et 40%, celle de la séquence (B') est d'au moins 70% et celle de la séquence (C) est comprise entre 20 et 40%, et dans lequel la teneur en styrène fixé de la séquence (A') est comprise entre 20 et 50% en poids et celle de séquence (B') est comprise entre 5 et 20% en poids.

6. Copolymère selon l'une quelconque des revendications 1 à 5, dans lequel au moins l'une des séquences a une étendue de répartition de la teneur en groupes vinyle d'au moins 20%.

7. Copolymère selon l'une quelconque des revendications 1 à 6, dans lequel les molécules du copolymère séquencé sont couplées avec un agent de couplage, à une efficacité de couplage d'au moins 20%.

8. Copolymère selon la revendication 7, dans lequel l'agent de couplage est un halogénure de silicium, de germanium, d'étain ou de plomb.

# F I G. I

POLYMERIZATION TEMPERATURE (°C)